# EUROPEAN PATENT APPLICATION

(11) **EP 3 145 203 A1**
(43) Date of publication of application: **22.03.2017**
(21) Application number: 16188834.2
(22) Date of filing: 14.09.2016
(51) Int. Cl.: H04N 21/414, H04N 21/488, H04N 21/443

(54) **SYSTEM FOR CONTROLLING NOTIFICATION EVENTS AND METHOD THEREOF**

(30) Priority: 21.09.2015 KR 20150133088
(71) Applicant: Samsung Electronics Co., Ltd., Suwon-si, Gyeonggi-do 16677 (KR)
(72) Inventor: YU, Min-chang, Gyeonggi-do (KR)
(74) Representative: Appleyard Lees IP LLP

(57) **Abstract**

A system for controlling a notification event and a method thereof are provided. An electronic device may include: a communication interface configured to communicate with an external device; and a controller configured to transmit information about a notification event which is set in the electronic device, to the external device through the communication interface when it is determined that a battery level at a first time is less than or equal to a preset threshold value, and the notification event is scheduled for a second time which is within a pre-defined time interval from the first time.

## Description

### CROSS-REFERENCE TO RELATED APPLICATION

This application claims priority from Korean Patent Application No. 10-2015-0133088, filed on September 21, 2015, in the Korean Intellectual Property Office, the disclosure of which is incorporated herein in its entirety by reference.

### BACKGROUND

### 1. Field

Apparatuses and methods consistent with exemplary embodiments relate to a system for controlling a notification event and a method thereof, and more particularly, to a system for controlling a notification event based on a remaining capacity of a battery and a method thereof.

### 2. Description of the Related Art

Various devices including mobile terminals provide complex and various functions.

Display devices have a function of displaying an image which a user may view. The user may view a broadcast program through a display device. Display devices display a broadcast program selected by a user among broadcast signals transmitted from broadcast stations. At present, broadcasting has largely moved from analog to digital formats worldwide.

Digital broadcasting refers to a method of broadcasting in which a digital image and a voice signal are transmitted. Compared with analog broadcasting, digital broadcasting is more robust against the interference from an external noise, thereby having a less data loss, a superior error correction performance, a higher resolution, and a sharper image. In addition, unlike analog broadcasting, digital broadcasting may provide a bidirectional service.

In addition, recently, smart televisions (TVs) have been providing various types of content in addition to a digital broadcasting function. The smart TVs can analyze and provide what a user wants even in the absence of a user input instead of passively operating according to an active user request. Researches have been conducted to provide to a user not only content but also a more convenient user environment.

### SUMMARY

One or more exemplary embodiments provide a system for controlling a notification event and a method thereof.

According to an aspect of an exemplary embodiment, an electronic device includes: a communication interface configured to communicate with an external device; and a controller configured to transmit information about a notification event which is set in the electronic device, to the external device through the communication interface when it is determined that a battery level at a first time is less than or equal to a preset threshold value, and the notification event is scheduled for a second time which is within a pre-defined time interval from the first time.

The controller maybe further configured to transmit a signal for requesting an execution of the notification event to the external device through the communication interface.

The controller maybe further configured to transmit the information about the notification event to the external device which is a suspended state, and wherein the signal for requesting the execution of the notification event comprises a signal for executing the notification event when the external device is the suspended state.

According to an aspect of an exemplary embodiment, when the external device is the suspended state based on a user input signal, a display is off state and the external device is connectable to the electronic device via a network.

The controller maybe further configured to transmit a signal indicating that the electronic device is in an on state to the external device through the communication interface, when the electronic device switches to an off state after transmitting the information about the notification event and then the electronic device switches from the off state to the on state.

According to an aspect of another exemplary embodiment, an electronic device includes: a communication interface configured to communicate with an external device; and a controller configured to: receive, at a first time, information about a notification event which is set in the external device from the external device through the communication interface, the notification event being scheduled for a second time later than the first time, execute the notification event when it is determined that the external device is in an off state at the second time.

The controller maybe further configured to receive a signal for requesting an execution of the notification event from the external device.

According to an aspect of exemplary embodiment, the signal for requesting the execution of the notification event comprises a signal for executing the notification event when the external device is the suspended state.

The controller maybe further configured to switch the electronic device from a suspended state to an on state at the second time and display information about execution of the notification event on a display.

The controller maybe further configured to display, as an overlay, information about execution of the notification event on the display at the second time.

The controller maybe further configured to display at least one of identification information of the external device and location information of the external device on the display at the second time.

The controller maybe further configured to provide information about execution of the notification event through the audio output interface at the second time.

The controller maybe further configured to delete the information about the notification event when a signal indicating that the external device is in the on state is received through the communication interface before the second time.

According to an aspect of another exemplary embodiment, a method includes: receiving, at a first time, information about a notification event which is set in an external device from the external device through a communication interface, the notification event being scheduled for a second time later than the first time; determining that the external device is in an off state at the second time; and executing the notification event.

The executing of the notification event may include switching the electronic device from a suspended state to an on state at the second time; and displaying information about the execution details of the notification event on a display.

The executing of the notification event may include displaying, as an overlay, information about the execution of the notification event on the display at the second time.

The executing of the notification event may include displaying at least one of identification information of the external device and location information of the external device on the display at the set second time of the notification event.

The executing of the notification event may include providing information about the execution details of the notification event through an audio output interface at the set second time of the notification event.

The method may further include deleting the information about the notification event when a signal indicating that the external device is in the on state is received before the second time.

### BRIEF DESCRIPTION OF THE DRAWINGS

The above and/or other aspects will become apparent and more readily appreciated from the following description of the embodiments, taken in conjunction with the accompanying drawings in which:
FIG. 1 illustrates a system for controlling a notification event, according to an exemplary embodiment;
FIGS. 2 and 3 are block diagrams of a first electronic device according to an exemplary embodiment;
FIGS. 4 and 5 are block diagrams of a second electronic device according to an exemplary embodiment;
FIGS. 6A and 6B illustrate power states of the first electronic device and the second electronic device, according to an exemplary embodiment;
FIG. 7 is a flowchart of a control method of the first electronic device, according to an exemplary embodiment;
FIG. 8 is a flowchart of a control method of the second electronic device, according to an exemplary embodiment;
FIG. 9 is a signaling sequence diagram for describing execution of a notification event in the second electronic device, according to an exemplary embodiment;
FIGS. 10 through 12 illustrate execution of a notification event in the second electronic device, according to an exemplary embodiment;
FIG. 13 is a sequence diagram for describing execution of a notification event in the second electronic device, according to another exemplary embodiment;
FIG. 14 illustrates execution of a notification event in the second electronic device, according to another exemplary embodiment; and
FIG. 15 is a sequence diagram for describing deletion of information about a notification event in the second electronic device, according to an exemplary embodiment.

### DETAILED DESCRIPTION

Reference will now be made in detail to embodiments, examples of which are illustrated in the accompanying drawings. In the drawings, parts irrelevant to the description are omitted to clearly describe the exemplary embodiments, and like reference numerals denote like elements throughout the specification. In this regard, the present embodiments may have different forms and should not be construed as being limited to the descriptions set forth herein. Accordingly, the embodiments are merely described below, by referring to the figures, to explain aspects.

The objectives, features, and advantages of the inventive concept will be clearer through the following detailed description. However, the inventive concept may be variously modified and have a plurality of embodiments, and hereinafter, specific embodiments are illustrated in the drawings and will be described in detail. In principle, like reference numerals denote like elements throughout the specification. In addition, in the following description, well-known functions or constructions are not described in detail so as not to obscure the invention with unnecessary detail. In addition, ordinal numbers (e.g., "first" and "second") used to describe the specification are merely identification symbols to differentiate an element from another element. Thus, sometimes the terms "a first electronic device" and "a second electronic device" may be used interchangeably depending on which term is introduced first. The word "exemplary" is used herein to mean "serving as an example or illustration." Any aspect or design described herein as "exemplary" is not necessarily to be construed as preferred or advantageous over other aspects or designs.

Hereinafter, electronic devices according to various exemplary embodiments are described in more detail with reference to the accompanying drawings. Suffixes "module," "unit," and "interface" for components to be used in the description below are assigned or mixed by only taking into account the easiness in editing the specification and do not have any meaning or role discriminated from one another by themselves.

The electronic devices described in the specification may include cellular phones, smartphones, tablet personal computers (PCs), laptop computers, digital broadcasting terminals, person digital assistants (PDAs), portable multimedia players (PMPs), global positioning system (GPS) navigation devices, and the like. However, it will be easily understood by those of ordinary skill in the art that configurations according to embodiments described in the specification may be applied to stationary terminals such as TVs and desktop computers as well if elements applicable only to mobile terminals are omitted or modified. The electronic devices described in the specification may include analog TVs, digital TVs, three-dimensional (3D) TVs, smart TVs, light-emitting diode (LED) TVs, organic light-emitting diode (OLED) TVs, plasma TVs, monitors, and the like.

Throughout the specification, when it is described that a certain part is "connected" to another part, it should be understood that the certain part may be "directly connected" to another part or "electrically connected" to another part via another element in the middle. In addition, when a component "includes" an element, unless noted otherwise, it should be understood that the component does not necessarily exclude another element but may further include other elements.

As used herein, the term "and/or" includes any and all combinations of one or more of the associated listed items. Expressions such as "at least one of," when preceding a list of elements, modify the entire list of elements and do not modify the individual elements of the list.

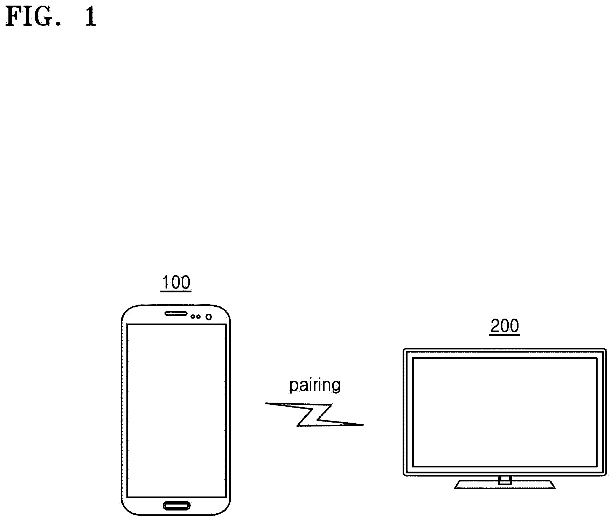

FIG. 1 illustrates a system for controlling a notification event, according to an exemplary embodiment.

Referring to FIG. 1, the system may include a first electronic device 100 and a second electronic device 200 which are communicable through a network.

The network may be a communications network. The communications network may include at least one of a computer network, the Internet, Internet of Things (IoT), and a telephone network.

According to an exemplary embodiment, the first electronic device 100 and the second electronic device 200 may include a communication interface but is not limited thereto.

According to an exemplary embodiment, the first electronic device 100 and the second electronic device 200 may be paired using a Bluetooth low energy (BLE) communication interface within a short distance. Bluetooth is a communication scheme of connecting electronic devices in a wireless manner within a short distance (within about 10 m). Pairing indicates connection between electronic devices supporting Bluetooth.

For example, the first electronic device 100 may be a smartphone, which is a mobile terminal, and the second electronic device 200 may be a smart TV, which is a stationary terminal. When the smartphone 100 and the smart TV 200 of a user are located within a short distance from each other, pairing may be automatically achieved when a Bluetooth function is activated in each of the devices.

According to an exemplary embodiment, when the first electronic device 100 switches to a power-off state due to a discharge of a battery of the first electronic device 100, a notification event scheduled in the first electronic device 100 may be provided by the second electronic device 200 instead. By doing this, even if the first electronic device 100 enters an off state due to unexpected discharge of the battery of the first electronic device 100 carried by the user, the user may receive the notification event through another electronic device 200, and thus, a convenient use environment may be provided to the user.

According to an exemplary embodiment, the notification event may indicate an event of providing notification information to the user when a specific time set in advance by the user arrives. For example, the notification event may be an event of notifying of schedule information at a scheduled time of the user. Alternatively, the notification event may be an event of outputting an alarm sound at a time set by the user but is not limited thereto.

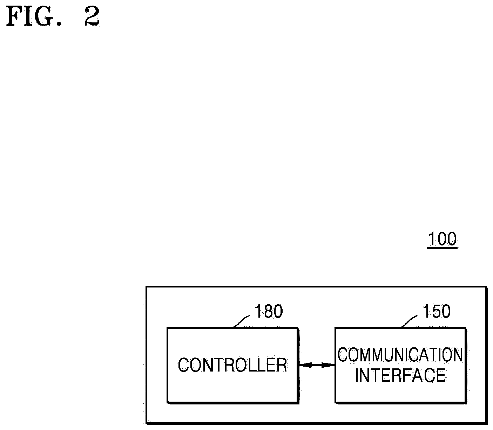

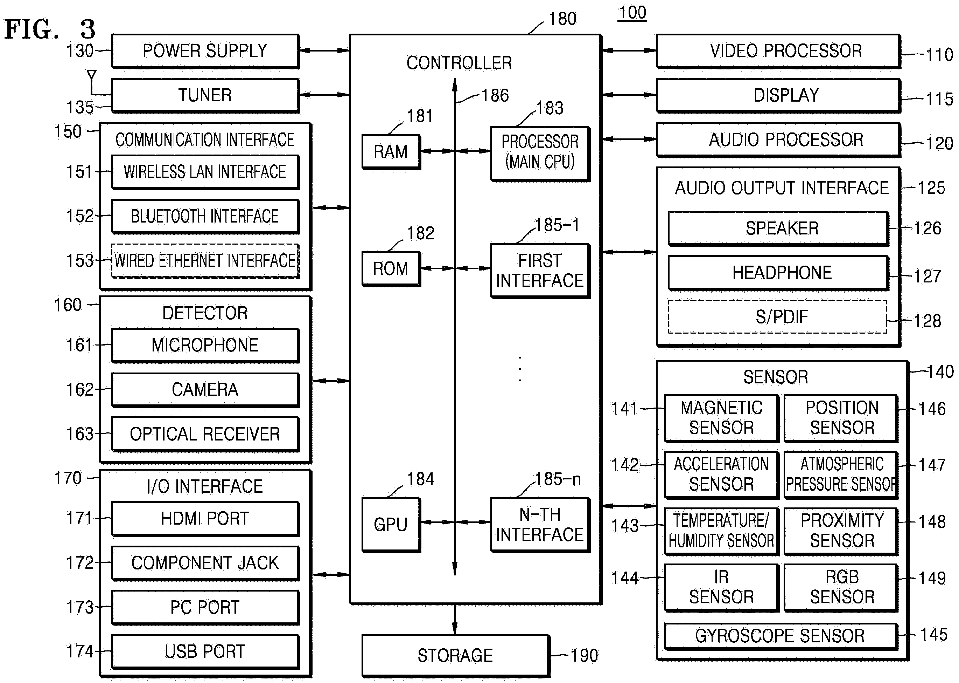

FIGS. 2 and 3 are block diagrams of the first electronic device 100 according to an exemplary embodiment.

As shown in FIG. 2, the first electronic device 100 may include a communication interface 150 and a controller 180. However, the shown components are not mandatory components. The first electronic device 100 may be implemented with more or fewer components than the shown components.

For example, as shown in FIG. 3, the first electronic device 100 may further include a video processor 110, an audio processor 120, an audio output interface 125, a power supply 130, a tuner 135, a sensor 140, a detector 160, an input/output (I/O) interface 170, and a storage 190.

The video processor 110 processes video data received by the first electronic device 100. The video processor 110 may perform various types of image processing, such as decoding, scaling, noise filtering, frame rate conversion, and resolution conversion, on the video data.

The display 115 displays video included in a broadcast signal received through the tuner 135 on a screen under control of the controller 180. In addition, the display 115 may display content (e.g., video) input through the communication interface 150 or the I/O interface 170. The display 115 may display an image stored in the storage 190 under control of the controller 180. In addition, the display 115 may display a voice user interface (UI) (e.g., including a voice command guide) for performing a voice recognition task corresponding to voice recognition or a motion UI (e.g., including a user motion guide for motion recognition) for performing a motion recognition task corresponding to motion recognition.

The audio processor 120 processes audio data. The audio processor 120 may perform various types of processing, such as decoding, amplification, and noise filtering, on the audio data. The audio processor 120 may include a plurality of audio processing modules for processing audio corresponding to a plurality of pieces of content.

The audio output interface 125 outputs audio included in a broadcast signal received through the tuner 135, under control of the controller 180. The audio output interface 125 may output audio (e.g., a voice or sound) input through the communication interface 150 or the I/O interface 170. In addition, the audio output interface 125 may output audio stored in the storage 190, under control of the controller 180. The audio output interface 125 may include at least one of a speaker 126, a headphone output terminal 127, and a Sony/Philips Digital Interface Format (S/PDIF) output terminal 128. The audio output interface 125 may include a combination of the speaker 126, the headphone output terminal 127, and the S/PDIF output terminal 128.

The power supply 130 supplies power input from an external power source to the internal components 110 to 190 of the first electronic device 100, under control of the controller 180. Alternatively, the power supply 130 may supply power input from one or more batteries located inside the first electronic device 100 to the internal components 110 to 190, under control of the controller 180.

The tuner 135 may process a broadcast signal received in a wired or wireless manner by means of amplification, mixing, resonance, and the like, and tune and select only a frequency of a channel which the first electronic device 100 desires to receive from among a number of received frequency components. The broadcast signal includes audio, video, and additional information (e.g., electronic program guide (EPG)).

The tuner 135 may receive a broadcast signal in a frequency band corresponding to a channel number (e.g., cable station number 506) according to a user input (e.g., a control signal received from a control device, examples of the control signal are a channel number input, a channel up/down input, and a channel input on an EPG screen image).

The tuner 135 may receive broadcast signals from various sources such as terrestrial broadcasting stations, cable broadcasting stations, satellite broadcasting stations, and Internet broadcasting stations. The tuner 135 may receive broadcast signals from sources such as analog broadcasting stations or digital broadcasting stations. A broadcast signal received through the tuner 135 is decoded (e.g., audio decoding, video decoding, or additional information decoding) and separated into audio, video, and/or additional information. The separated audio, video, and/or additional information may be stored in the storage 190 under control of the controller 180.

The tuner 135 of the first electronic device 100 may be single or plural in number. The tuner 135 may be integrated into the first electronic device 100 or implemented as a separate device (e.g., a set-top box having a tuner) electrically connected to the first electronic device 100 or as a tuner connected to the I/O interface 170.

According to an exemplary embodiment, the tuner 135 may receive a broadcast signal and output the received broadcast signal to the display 115, under control of the controller 180.

The sensor 140 may detect a state of the first electronic device 100 or a state of the surroundings of the first electronic device 100 and transmit the detected information to the controller 180. The sensor 140 may include at least one of a magnetic sensor 141, an acceleration sensor 142, a temperature/humidity sensor 143, an infrared (IR) sensor 144, a gyroscope sensor 145, a position sensor (e.g., a global positioning system (GPS) sensor) 146, an atmospheric pressure sensor 147, a proximity sensor 148, and a red, green, blue (RGB) color sensor (e.g., illuminance sensor) 149, but is not limited thereto. A function of each sensor may be intuitively inferred by those of ordinary skill in the art from a name thereof, and thus a detailed description thereof is omitted herein.

In addition, the sensor 140 may include a sensor for sensing a touch input by means of an input tool and a sensor for sensing a touch input by the user. In this case, the sensor for sensing a touch input by the user may be included in a touch screen or a touch pad. In addition, the sensor for sensing a touch input by means of an input tool may be located at a lower part of the touch screen or the touch pad or included in the touch screen or the touch pad.

The communication interface 150 may connect the first electronic device 100 to an external device (e.g., an audio device) under control of the controller 180. The controller 180 may transmit/receive content to/from an external device connected through the communication interface 150, download an application from the external device, or perform web browsing through the communication interface 150.

The communication interface 150 may include at least one of a wireless local area network (WLAN) interface 151, a Bluetooth interface 152, and a wired Ethernet interface 153 in correspondence with the performance and structure of the first electronic device 100. Alternatively, the communication interface 150 may include a combination of the WLAN interface 151, the Bluetooth interface 152, and the wired Ethernet interface 153.

In addition, the communication interface 150 may include a BLE communication interface, a near-field communication (NFC) interface, a WLAN (Wi-Fi) communication interface, a Zigbee communication interface, an infrared data association (IrDA) communication interface, a Wi-Fi Direct (WFD) communication interface, an ultra-wideband communication interface, an Ant+ communication interface, and the like, but is not limited thereto.

In addition, the communication interface 150 may transmit and receive a wireless signal to and from at least one of a base station, an external terminal, and a server in a mobile communication network. Herein, the wireless signal may include a voice call signal, a video call signal, or various types of data according to transmission and reception of a text/multimedia message.

In addition, the communication interface 150 may include a broadcast receiver configured to receive broadcast signals and/or broadcast-related information from the outside through broadcast channels. The broadcast channels may include satellite channels, cable channels, and terrestrial channels.

In addition, the communication interface 150 may receive a control signal of an external control device under control of the controller 180. The control signal may be implemented in a Bluetooth type, a radio frequency (RF) signal type, or a Wi-Fi type.

According to an exemplary embodiment, the communication interface 150 may communicate with the second electronic device 200 under control of the controller 180. Particularly, according to an exemplary embodiment, the communication interface 150 may include a BLE communication interface and a WLAN (Wi-Fi) communication interface and transmit and receive a predetermined control signal to and from the second electronic device 200 located within a certain distance.

According to an exemplary embodiment, the communication interface 150 may transmit information about a notification event to the second electronic device 200 under control of the controller 180.

According to an exemplary embodiment, the communication interface 150 may transmit a signal for requesting for execution of the notification event to the second electronic device 200 under control of the controller 180.

According to an exemplary embodiment, the communication interface 150 may transmit a signal indicating that the first electronic device 100 is in an on state to the second electronic device 200 under control of the controller 180 if the first electronic device 100 switches to an off state after transmitting the information about the notification event, and then if the first electronic device 100 switches from the off state to the on state.

The detector 160 detects a voice of the user, an image of the user, or an interaction of the user.

A microphone 161 receives a voice uttered by the user. The microphone 161 may convert the received voice into an electrical signal and output the converted electrical signal to the controller 180. The user's voice may include, for example, a voice corresponding to a menu or function of the first electronic device 100. A recognition range of the microphone 161 is recommended to be within 4 m from the microphone 161 toward a user's location. The recognition range of the microphone 161 may vary in correspondence with a volume of the user's voice and an ambient environment (e.g., a speaker sound and ambient noise).

The microphone 161 may be implemented by being integrated with or separated from the first electronic device 100. The separated microphone 161 may be electrically connected to the first electronic device 100 through the communication interface 150 or the I/O interface 170.

Those of ordinary skill in the art will understand that the microphone 161 may be omitted according to the performance and structure of the first electronic device 100.

A camera 162 may include a lens and an image sensor. The camera 162 may support optical zoom or digital zoom by using a plurality of lenses and image processing. The recognition range of the camera 162 may be variously set according to an angle of the camera 162 and an ambient environment condition. When the camera 162 includes a plurality of cameras, a 3D still image or a 3D motion may be received using the plurality of cameras.

The camera 162 may be implemented by being integrated with or separated from the first electronic device 100. A separate device including the separated camera 162 may be electrically connected to the first electronic device 100 through the communication interface 150 or the I/O interface 170.

Those of ordinary skill in the art will understand that the camera 162 may be omitted according to the performance and structure of the first electronic device 100.

An optical receiver 163 receives an optical signal (including a control signal) received from an external control device through an optical window or the like of a bezel of the display 115. The optical receiver 163 may receive an optical signal corresponding to a user input (e.g., a touch, a push, a touch gesture, a voice, or a motion) from the external control device. A control signal may be extracted from the received optical signal under control of the controller 180.

The I/O interface 170 receives video (e.g., a moving picture), audio (e.g., a voice or music), and additional information (e.g., an EPG), and the like from the outside of the first electronic device 100 under control of the controller 180. The I/O interface 170 may include one of a high definition multimedia interface (HDMI) port 171, a component jack 172, a PC port 173, and a Universal Serial Bus (USB) port 174. The I/O interface 170 may include a combination of the HDMI port 171, the component jack 172, the PC port 173, and the USB port 174.

Those of ordinary skill in the art will understand that a configuration and operation of the I/O interface 170 may be variously implemented according to exemplary embodiments.

The controller 180 controls a general operation of the first electronic device 100 and a signal flow between the internal components 110 to 190 of the first electronic device 100 and processes data. If an input of the user is received, or a previously set and stored condition is satisfied, the controller 180 may execute an operating system (OS) and various applications stored in the storage 190.

The controller 180 may include a random access memory (RAM) 181 used to store a signal or data input from the outside of the first electronic device 100 or used as a storage region corresponding to various operations performed by the first electronic device 100, a read-only memory (ROM) 182 in which a control program for controlling the first electronic device 100 is stored, and a processor 183.

The processor 183 may include a graphic processing unit (GPU) for processing graphics corresponding to video. The processor 183 may be implemented by a system on chip (SoC) in which a core and a GPU are integrated. The processor 183 may include a single core, dual cores, triple cores, quad cores, or a multiple number of cores.

In addition, the processor 183 may include a plurality of processors. For example, the processor 183 may be implemented by a main processor and one or more sub-processors which operate in a sleep mode.

A GPU 184 generates a screen image including various objects, such as an icon, an image, and a text, by using a computation unit and a renderer. The computation unit computes attribute values such as a coordinate value, a shape, a size, and a color by which each object is to be displayed according to a layout of a screen image by using a user interaction detected through the detector 160. The renderer generates various layouts of screen images including objects based on the attribute values computed by the computation unit. A screen image generated by the renderer is displayed in a display area of the display 115.

First to n-th interfaces 185-1 to 185-n are connected to the various components described above. One of the first to n-th interfaces 185-1 to 185-n may be a network interface connected to an external device via a network.

The RAM 181, the ROM 182, the processor 183, the GPU 184, and the first to n-th interfaces 185-1 to 185-n may be connected to each other via an internal bus 186.

In the present exemplary embodiment, the term "controller" may include the processor 183, the ROM 182, and the RAM 181.

According to an exemplary embodiment, the controller 180 of the first electronic device 100 may transmit information about a notification event to the second electronic device 200 through the communication interface 150 if it is determined that a remaining capacity of the battery of the first electronic device 100 is less than or equal to a preset threshold value, and if the notification event is set to be scheduled within a pre-defined time from a time point at which it was determined that the remaining capacity of the battery was less than or equal to the preset threshold value.

According to an exemplary embodiment, the controller 180 of the first electronic device 100 may transmit a signal for requesting for execution of the notification event to the second electronic device 200 through the communication interface 150.

According to an exemplary embodiment, the controller 180 of the first electronic device 100 may transmit a signal indicating that the first electronic device 100 is in the on state to the second electronic device 200 through the communication interface 150 if the first electronic device 100 switches to the off state after transmitting the information about the notification event and then if the first electronic device 100 switches from the off state to the on state.

Those of ordinary skill in the art will understand that a configuration and operation of the controller 180 may be variously implemented according to various exemplary embodiments.

The storage 190 may store various data, programs, or applications for operating and controlling the first electronic device 100 under control of the controller 180. The storage 190 may store signals or data input/output in correspondence with operations of the video processor 110, the display 115, the audio processor 120, the audio output interface 125, the power supply 130, the tuner 135, the sensor 140, the communication interface 150, the detector 160, and the I/O interface 170. The storage 190 may store control programs for controlling the first electronic device 100 and the controller 180, applications initially provided from a manufacturer or downloaded from the outside, graphic user interfaces (GUIs) related to the applications, objects (e.g., image text, icons, and buttons) for providing the GUIs, user information, documents, databases (DBs), or related data.

According to an exemplary embodiment, the term "storage" includes the storage 190, the ROM 182 of the controller 180, the RAM 181 of the controller 180, or a memory card (e.g., a micro secure digital (SD) card, a USB memory, etc.) mounted in the first electronic device 100. In addition, the storage 190 may include a nonvolatile memory, a volatile memory, a hard disk drive (HDD), or a solid-state drive (SSD).

The storage 190 may include a broadcast reception module, a channel control module, a volume control module, a communication control module, a voice recognition module, a motion recognition module, an optical reception module, a display control module, an audio control module, an external input control module, a power control module, a power control module for an external device connected in a wireless manner (e.g., Bluetooth), a voice DB, or a motion DB. These modules and DBs of the storage 190 may be implemented by software to perform, by the first electronic device 100, a broadcast reception control function, a channel control function, a volume control function, a communication control function, a voice recognition function, a motion recognition function, an optical reception control function, a display control function, an audio control function, an external input control function, a power control function, or a power control function for an external device connected in a wireless manner (e.g., Bluetooth). The controller 180 may perform each function by using the above-described software modules stored in the storage 190.

At least one component may be added to or omitted from the components (e.g., 110 to 190) shown in the first electronic device 100 of FIG. 3 according to the performance of the first electronic device 100. In addition, those of ordinary skill in the art will understand that locations of the components (e.g., 110 to 190) may be modified according to the performance or structure of the first electronic device 100.

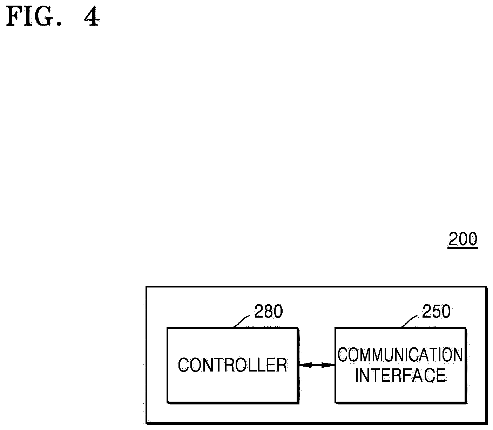

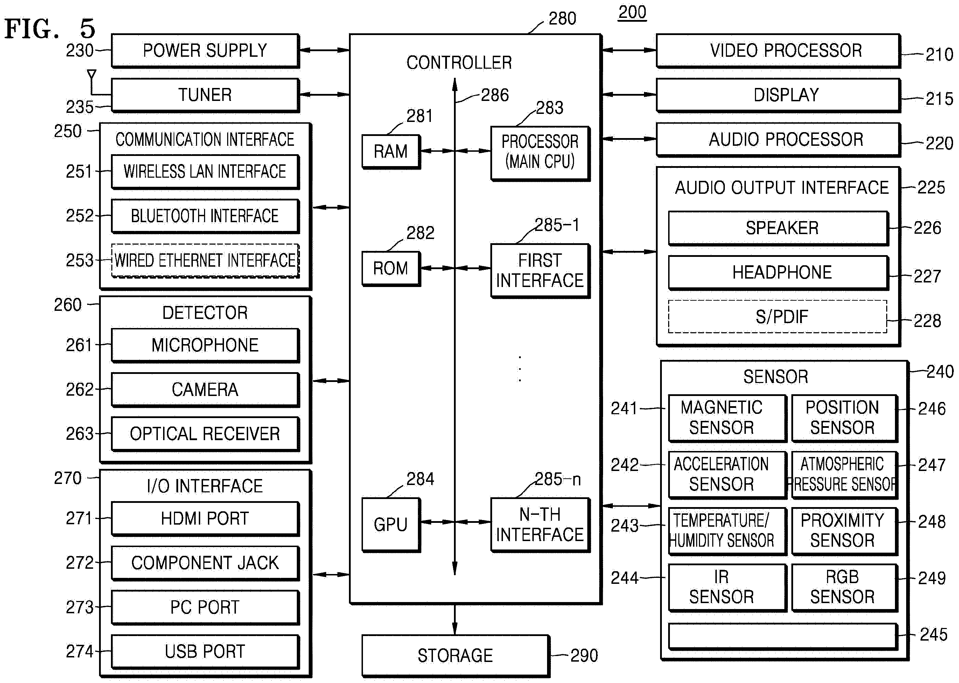

FIGS. 4 and 5 are block diagrams of the second electronic device 200 according to an exemplary embodiment.

According to FIG. 4, the second electronic device 200 may include a communication interface 250 and a controller 280. However, the shown components are not mandatory. The second electronic device 200 may be implemented with more or fewer components than the components shown.

For example, as shown in FIG. 5, the second electronic device 200 according to an exemplary embodiment may further include a video processor 210, an audio processor 220, an audio output interface 225, a power supply 230, a tuner 235, a sensor 240, a detector 260, an I/O interface 270, and a storage 290.

The video processor 210 processes video data received by the second electronic device 200. The video processor 210 may perform various types of image processing, such as decoding, scaling, noise filtering, frame rate conversion, and resolution conversion, on the video data.

The display 215 displays video included in a broadcast signal received through the tuner 235 on a screen under control of the controller 280. In addition, the display 215 may display content (e.g., video) input through the communication interface 250 or the I/O interface 270. The display 215 may display an image stored in the storage 290 under control of the controller 280. In addition, the display 215 may display a voice UI (e.g., including a voice command guide) for performing a voice recognition task corresponding to voice recognition or a motion UI (e.g., including a user motion guide for motion recognition) for performing a motion recognition task corresponding to motion recognition.

The audio processor 220 processes audio data. The audio processor 220 may perform various types of processing, such as decoding, amplification, and noise filtering, on the audio data. The audio processor 220 may include a plurality of audio processing modules for processing audio corresponding to a plurality of pieces of content.

The audio output interface 225 outputs audio included in a broadcast signal received through the tuner 235, under control of the controller 280. The audio output interface 225 may output audio (e.g., a voice or sound) input through the communication interface 250 or the I/O interface 270. In addition, the audio output interface 225 may output audio stored in the storage 290, under control of the controller 280. The audio output interface 225 may include at least one of a speaker 226, a headphone output terminal 227, and an S/PDIF output terminal 228. The audio output interface 225 may include a combination of the speaker 226, the headphone output terminal 227, and the S/PDIF output terminal 228.

The power supply 230 supplies power input from an external power source to the internal components 210 to 290 of the second electronic device 200, under control of the controller 280. Alternatively, the power supply 230 may supply power input from one or more batteries located inside the second electronic device 200 to the internal components 210 to 290, under control of the controller 280.

The tuner 235 may process a broadcast signal received in a wired or wireless manner by means of amplification, mixing, resonance, and the like, and tune and select only a frequency of a channel which the second electronic device 200 desires to receive from among a number of received frequency components. The broadcast signal includes audio, video and additional information (e.g., EPG).

The tuner 235 may receive a broadcast signal in a frequency band corresponding to a channel number (e.g., cable station number 506) according to a user input (e.g., a control signal received from a control device, examples of the control signal are a channel number input, a channel up/down input, and a channel input on an EPG screen image).

The tuner 235 may receive broadcast signals from various sources such as terrestrial broadcasting stations, cable broadcasting stations, satellite broadcasting stations, and Internet broadcasting stations. The tuner 235 may receive broadcast signals from sources such as analog broadcasting stations or digital broadcasting stations. A broadcast signal received through the tuner 235 is decoded (e.g., audio decoding, video decoding, or additional information decoding) and separated into audio, video, and/or additional information. The separated audio, video, and/or additional information may be stored in the storage 290 under control of the controller 280.

The tuner 235 of the second electronic device 200 may be single or plural in number. The tuner 235 may be integrated into the second electronic device 200 or implemented as a separate device (e.g., a set-top box having a tuner) electrically connected to the second electronic device 200 or as a tuner connected to the I/O interface 270.

According to an exemplary embodiment, the tuner 235 may receive a broadcast signal and output the received broadcast signal to the display 215, under control of the controller 280.

The sensor 240 may detect a state of the second electronic device 200 or a state of the surroundings of the second electronic device 200 and transmit the detected information to the controller 280. The sensor 240 may include at least one of a magnetic sensor 241, an acceleration sensor 242, a temperature/humidity sensor 243, an IR sensor 244, a gyroscope sensor 245, a position sensor (e.g., a GPS sensor) 246, an atmospheric pressure sensor 247, a proximity sensor 248, and an RGB color sensor (e.g., illuminance sensor) 249 but is not limited thereto. A function of each sensor may be intuitively inferred by those of ordinary skill in the art from a name thereof, and thus a detailed description thereof is omitted herein.

In addition, the sensor 240 may include a sensor for sensing a touch input by means of an input tool and a sensor for sensing a touch input by the user. In this case, the sensor for sensing a touch input by the user may be included in a touch screen or a touch pad. In addition, the sensor for sensing a touch input by means of an input tool may be located at a lower part of the touch screen or the touch pad or included in the touch screen or the touch pad.

The communication interface 250 may connect the second electronic device 200 to an external device (e.g., an audio device) under control of the controller 280. The controller 280 may transmit/receive content to/from an external device connected through the communication interface 250, download an application from the external device, or perform web browsing through the communication interface 250.

The communication interface 250 may include at least one of a WLAN interface 251, a Bluetooth interface 252, and a wired Ethernet interface 253 in correspondence with the performance and structure of the second electronic device 200. Alternatively, the communication interface 250 may include a combination of the WLAN interface 251, the Bluetooth interface 252, and the wired Ethernet interface 253.

In addition, the communication interface 250 may include a BLE communication interface, an NFC interface, a WLAN (Wi-Fi) communication interface, a Zigbee communication interface, an IrDA communication interface, a WFD communication interface, an ultra-wideband communication interface, an Ant+ communication interface, and the like but is not limited thereto.

In addition, the communication interface 250 may transmit and receive a wireless signal to and from at least one of a base station, an external terminal, and a server in a mobile communication network. Herein, the wireless signal may include a voice call signal, a video call signal, or various types of data according to transmission and reception of a text/multimedia message.

In addition, the communication interface 250 may include a broadcast receiver configured to receive broadcast signals and/or broadcast-related information from the outside through broadcast channels. The broadcast channels may include satellite channels, cable channels, and terrestrial channels.

In addition, the communication interface 250 may receive a control signal of an external control device under control of the controller 280. The control signal may be implemented in a Bluetooth type, a RF signal type, or a Wi-Fi type.

According to an exemplary embodiment, the communication interface 250 may communicate with the first electronic device 100 under control of the controller 280. Particularly, according to an exemplary embodiment, the communication interface 250 may include a BLE communication interface and a WLAN (Wi-Fi) communication interface and transmit and receive a predetermined control signal to and from the first electronic device 100 located within a certain distance.

According to an exemplary embodiment, the communication interface 250 may receive information about a notification event to the first electronic device 100 under control of the controller 280.

According to an exemplary embodiment, the communication interface 250 may receive a signal indicating that the first electronic device 100 is in the on state from the first electronic device 100 under control of the controller 280.

The detector 260 detects a voice of the user, an image of the user, or an interaction of the user.

A microphone 261 receives a voice uttered by the user. The microphone 261 may convert the received voice into an electrical signal and output the converted electrical signal to the controller 280. The user's voice may include, for example, a voice corresponding to a menu or function of the second electronic device 200. A recognition range of the microphone 261 is recommended to be within 4 m from the microphone 261 toward a user's location. The recognition range of the microphone 261 may vary in correspondence with a volume of the user's voice and an ambient environment (e.g., a speaker sound and ambient noise).

The microphone 261 may be implemented by being integrated with or separated from the second electronic device 200. The separated microphone 261 may be electrically connected to the second electronic device 200 through the communication interface 250 or the I/O interface 270.

Those of ordinary skill in the art will understand that the microphone 261 may be omitted according to the performance and structure of the second electronic device 200.

A camera 262 may include a lens and an image sensor. The camera 262 may support optical zoom or digital zoom by using a plurality of lenses and image processing. The recognition range of the camera 262 may be variously set according to an angle of the camera 262 and an ambient environment condition. When the camera 262 includes a plurality of cameras, a 3D still image or a 3D motion may be received using the plurality of cameras.

The camera 262 may be implemented by being integrated with or separated from the second electronic device 200. A separate device including the separated camera 262 may be electrically connected to the second electronic device 200 through the communication interface 250 or the I/O interface 270.

Those of ordinary skill in the art will understand that the camera 262 may be omitted according to the performance and structure of the second electronic device 200.

An optical receiver 263 receives an optical signal (including a control signal) received from an external control device through an optical window or the like of a bezel of the display 215. The optical receiver 263 may receive an optical signal corresponding to a user input (e.g., a touch, a push, a touch gesture, a voice, or a motion) from the external control device. A control signal may be extracted from the received optical signal under control of the controller 280.

The I/O interface 270 receives video (e.g., a moving picture), audio (e.g., a voice or music), and additional information (e.g., an EPG), and the like from the outside of the second electronic device 200 under control of the controller 280. The I/O interface 270 may include one of an HDMI port 271, a component jack 272, a PC port 273, and a USB port 274. The I/O interface 270 may include a combination of the HDMI port 271, the component jack 272, the PC port 273, and the USB port 274.

Those of ordinary skill in the art will understand that a configuration and operation of the I/O interface 270 may be variously implemented according to exemplary embodiments.

The controller 280 controls a general operation of the second electronic device 200 and a signal flow between the internal components 210 to 290 of the second electronic device 200 and processes data. If an input of the user is received, or a previously set and stored condition is satisfied, the controller 280 may execute an OS and various applications stored in the storage 290.

The controller 280 may include a RAM 281 used to store a signal or data input from the outside of the second electronic device 200 or used as a storage region corresponding to various operations performed by the second electronic device 200, a ROM 282 in which a control program for controlling the second electronic device 200 is stored, and a processor 283.

The processor 283 may include a GPU for processing graphics corresponding to video. The processor 283 may be implemented by an SoC in which a core and a GPU are integrated. The processor 283 may include a single core, dual cores, triple cores, quad cores, or a multiple number of cores.

In addition, the processor 283 may include a plurality of processors. For example, the processor 283 may be implemented by a main processor and one or more sub-processors which operate in a sleep mode.

A GPU 284 generates a screen image including various objects, such as an icon, an image, and a text, by using a computation unit and a renderer. The computation unit computes attribute values such as a coordinate value, a shape, a size, and a color by which each object is to be displayed according to a layout of a screen image by using a user interaction detected through the detector 260. The renderer generates various layouts of screen images including objects based on the attribute values computed by the computation unit. A screen image generated by the renderer is displayed in a display area of the display 215.

First to n-th interfaces 285-1 to 285-n are connected to the various components described above. One of the first to n-th interfaces 285-1 to 285-n may be a network interface connected to an external device via a network.

The RAM 281, the ROM 282, the processor 283, the GPU 284, and the first to n-th interfaces 285-1 to 285-n may be connected to each other via an internal bus 286.

In the present exemplary embodiment, the term "controller" may include the processor 283, the ROM 282, and the RAM 281.

According to an exemplary embodiment, the controller 280 of the second electronic device 200 may receive information about a notification event of the first electronic device 100 from the first electronic device 100 through the communication interface 250 and store the received information in the storage 290.

According to an exemplary embodiment, the controller 280 of the second electronic device 200 may execute the notification event if it is determined that the first electronic device 100 is in the off state at a set time of the notification event.

According to an exemplary embodiment, the controller 280 of the second electronic device 200 may delete the information about the notification event if a signal indicating that the first electronic device 100 is in the on state is received through the communication interface 250 before the set time of the notification event.

According to an exemplary embodiment, the controller 280 of the second electronic device 200 may switch the second electronic device 200 in a suspended state to the on state at the set time of the notification event and display the execution details of the notification event on the display 215.

The controller 280 of the second electronic device 200 may display, as an overlay, the execution details of the notification event on a partial region of the display 215 which displays an image, at the set time of the notification event.

The controller 280 of the second electronic device 200 may display identification information of the first electronic device 100 and/or location information of the first electronic device 100 on the display 215 at the set time of the notification event.

The controller 280 of the second electronic device 200 may provide the execution details of the notification event through the audio output interface 225 at the set time of the notification event.

Those of ordinary skill in the art will understand that a configuration and operation of the controller 280 may be variously implemented according to various exemplary embodiments.

The storage 290 may store various data, programs, or applications for operating and controlling the second electronic device 200 under control of the controller 280. The storage 290 may store signals or data input/output in correspondence with operations of the video processor 210, the display 215, the audio processor 220, the audio output interface 225, the power supply 230, the tuner 235, the sensor 240, the communication interface 250, the detector 260, and the I/O interface 270. The storage 290 may store control programs for controlling the second electronic device 200 and the controller 280, applications initially provided from a manufacturer or downloaded from the outside, GUIs related to the applications, objects (e.g., image text, icons, and buttons) for providing the GUIs, user information, documents, DBs, or related data.

According to an exemplary embodiment, the term "storage" includes the storage 290, the ROM 282 of the controller 280, the RAM 281 of the controller 280, or a memory card (e.g., a micro SD card, a USB memory, etc.) mounted in the second electronic device 200. In addition, the storage 290 may include a nonvolatile memory, a volatile memory, an HDD, or an SSD.

According to an exemplary embodiment, the storage 290 may store the information about the notification event of the first electronic device 100, which has been received from the first electronic device 100 through the communication interface 250, under control of the controller 280.

The storage 290 may include a broadcast reception module, a channel control module, a volume control module, a communication control module, a voice recognition module, a motion recognition module, an optical reception module, a display control module, an audio control module, an external input control module, a power control module, a power control module for an external device connected in a wireless manner (e.g., Bluetooth), a voice DB, or a motion DB. These modules and DBs of the storage 290 may be implemented by software to perform, by the second electronic device 200, a broadcast reception control function, a channel control function, a volume control function, a communication control function, a voice recognition function, a motion recognition function, an optical reception control function, a display control function, an audio control function, an external input control function, a power control function, or a power control function for an external device connected in a wireless manner (e.g., Bluetooth), The controller 280 may perform each function by using the above-described software modules stored in the storage 290.

In addition, the second electronic device 200 having the display 215 may be electrically connected to an external device (e. g., a set-top box including a tuner). For example, those of ordinary skill in the art will understand that the second electronic device 200 may be implemented by an analog TV, a digital TV, a 3D TV, a smart TV, an LED TV, an OLED TV, a plasma TV, a monitor, or the like, but is not limited thereto.

At least one component may be added to or omitted from the components (e.g., 210 to 290) shown with respect to the second electronic device 200 of FIG. 5 according to the performance of the second electronic device 200. In addition, those of ordinary skill in the art will understand that locations of the components (e.g., 210 to 290) may be modified according to the performance or structure of the second electronic device 200.

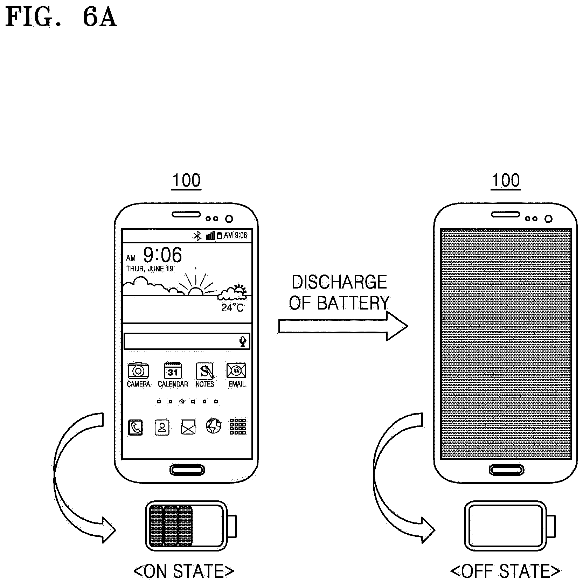

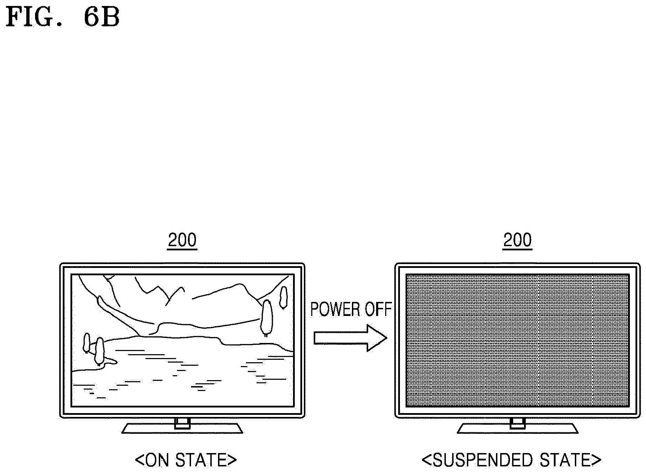

FIGS. 6A and 6B illustrate power states of the first electronic device 100 and the second electronic device 200, according to an exemplary embodiment.

As shown in FIG. 6A, the first electronic device 100 in the on state may switch to the off state when the battery thereof is fully discharged. According to an exemplary embodiment, the power supply 130 of the first electronic device 100 may supply power output from the battery located inside the first electronic device 100 to the internal components (110 to 190).

For example, the first electronic device 100 may be a mobile device (e.g., a smartphone). The first electronic device 100 may automatically switch to the off state when the battery inside the first electronic device 100 is fully discharged.

As shown in FIG. 6B, the second electronic device 200 in the on state may switch to the suspended state based on a user input for turning the power off.

According to an exemplary embodiment, the power supply 230 of the second electronic device 200 may supply power input from an external power source to the components (210 to 290) inside the second electronic device 200, under control of the controller 280.

For example, the second electronic device 200 may be a smart TV. The second electronic device 200 may switch to the suspended state according to a user input for turning power off in a state in which power is supplied from an external power source.

The suspended state indicates a state in which minimum or limited power for performing limited functions is maintained even when a display of an electronic device is turned off according to a user input. For example, the second electronic device 200 may perform a timer function, a digital video recorder (DVR) function, and the like in the suspended state.

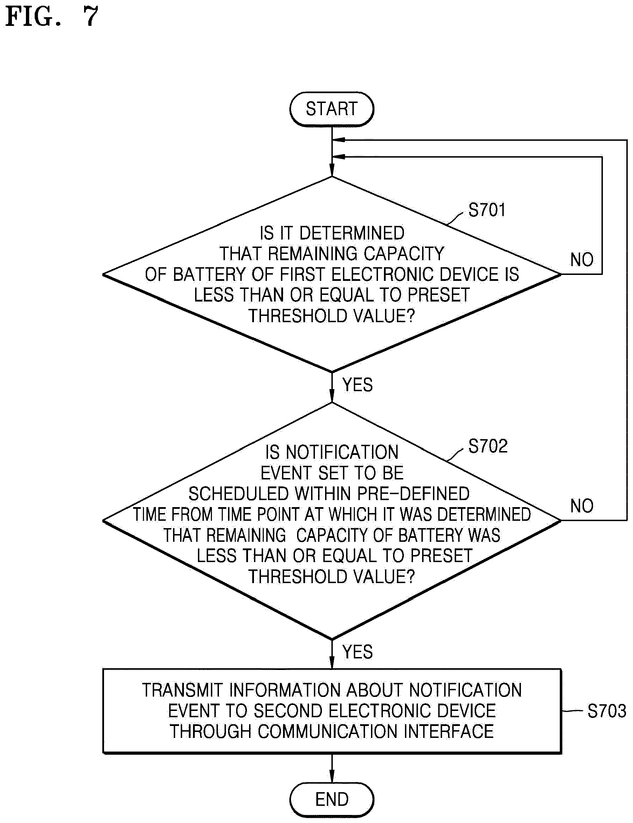

FIG. 7 is a flowchart of a control method of the first electronic device 100, according to an exemplary embodiment.

In operation S701 of FIG. 7, the controller 180 of the first electronic device 100 according to an exemplary embodiment may determine whether a remaining battery power is less than or equal to a preset threshold value.

According to an exemplary embodiment, the controller 180 of the first electronic device 100 may monitor the remaining battery power at preset time intervals. For example, the controller 180 may be configured to monitor the battery power level in a shorter interval than the preset time interval if it is determined that the battery power is less than or equal to 20% of a full capacity of the battery, but the disclosure is not limited thereto.

According to an exemplary embodiment, the controller 180 may preset the threshold value for the remaining battery level. According to an exemplary embodiment, the threshold value for the remaining battery level may be set as an operable time of the first electronic device 100. Alternatively, according to an exemplary embodiment, the threshold value for the battery level may be set as a percentage of the remaining battery level compared to a full battery capacity.

For example, the controller 180 may determine that the remaining battery level is less than or equal to the preset time interval when it is determined that an operable time of the first electronic device 100 is about 10 minutes or less based on the current battery level. Alternatively, for example, the controller 180 may determine that the battery level is less than or equal to the preset time interval when it is determined that the battery level is less than or equal to about 5% the capacity of a fully charged battery.

In operation S702, the controller 180 of the first electronic device 100 may determine whether a notification event is set to be scheduled within a pre-defined time from a time point at which it was determined that the remaining capacity of the battery was less than or equal to the preset threshold value.

According to an exemplary embodiment, the first electronic device 100 may preset the notification event. For example, the first electronic device 100 may provide a schedule notification function through an output of a message and/or a sound or vibrations for informing of schedule information of the user when a preset time comes. In addition, the first electronic device 100 may provide an alarm function of providing an output of an alarm sound and/or an output of vibrations when a preset time comes.

According to an exemplary embodiment, if it is determined that an operable time of the first electronic device 100 is less than or equal to, for example, 20 minutes based on a remaining battery power, the first electronic device 100 may determine whether a notification event scheduled within, for example, one hour from the determined time point is set.

In operation S703, the controller 180 of the first electronic device 100 may transmit information about the notification event to the second electronic device 200 through the communication interface 150 if it is determined that there exists the notification event scheduled within the pre-defined time from the time point at which it was determined that the remaining battery power was less than or equal to the preset threshold value.

For example, when it is predicted that the first electronic device 100 is fully discharged after about 20 minutes and switches to the off state, there may be a high possibility that a schedule notification event scheduled for 30 minutes later could not be executed. According to an exemplary embodiment, the first electronic device 100 may request the second electronic device 200, which is connectable through a network, to execute the schedule notification event instead.

Accordingly, even in the off state of the first electronic device 100, which is not expected by the user, due to a discharge of the battery of the first electronic device 100, the user may receive the preset scheduled notification event through the second electronic device 200.

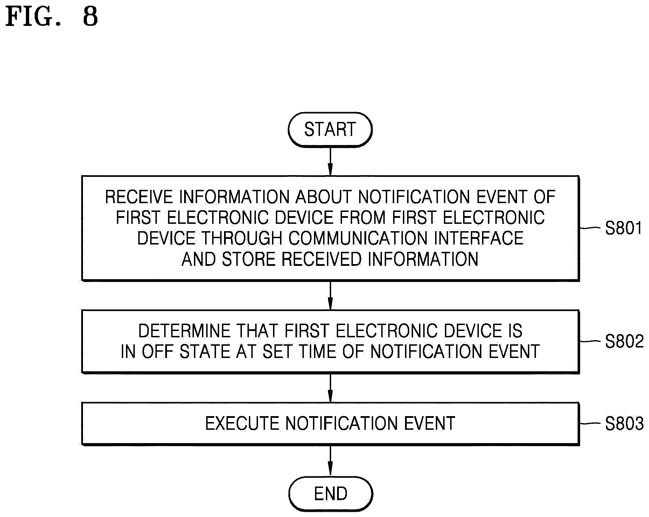

FIG. 8 is a flowchart of a control method of the second electronic device 200, according to an exemplary embodiment.

In operation S801 of FIG. 8, the controller 280 of the second electronic device 200 may receive information about a notification event of the first electronic device 100 from the first electronic device 100 through the communication interface 250 and store the received information.

According to an exemplary embodiment, when the first electronic device 100 transmits the information about the notification event to the second electronic device 200 in operation S703 of FIG. 7, the second electronic device 200 may receive the information about the notification event and store the received information in the storage 290.

In addition, according to an exemplary embodiment, the first electronic device 100 may transmit a signal for requesting for execution of the notification event to the second electronic device 200 through the communication interface 150.

In operation S802, the controller 280 of the second electronic device 200 according to an exemplary embodiment may determine that the first electronic device 100 is in the off state at a set time of the notification event. Alternatively, the controller 280 may determine that the first electronic device 100 is in the suspended state at the set time of the notification event.

According to an exemplary embodiment, the second electronic device 200 may determine that the first electronic device 100 is in the off state if a signal indicating that the first electronic device 100 is in the on state is not received before the set time of the notification event based on the information about the notification event, which has been received from the first electronic device 100.

In operation S803, the controller 280 of the second electronic device 200 according to an exemplary embodiment may execute the notification event.

According to an exemplary embodiment, the second electronic device 200 may switch the suspended state to the on state at the set time of the notification event. In addition, the second electronic device 200 may display the execution details of the notification event on the display 215. For example, the execution details of the notification event may include schedule information of the user.

According to an exemplary embodiment, the second electronic device 200 may display, as a display overlay, the execution details of the notification event on a partial region of the display 215 which displays an image, at the set time of the notification event. For example, if the set time of the notification event comes when the second electronic device 200 is in the on state, schedule notification information of the user may be displayed, as an overlay, alongside a broadcast image being displayed on the display 215.

According to an exemplary embodiment, the second electronic device 200 may display identification information of the first electronic device 100 and/or location information of the first electronic device 100 on the display 215 at the set time of the notification event. For example, the second electronic device 200 may also provide information about the first electronic device 100 when executing the notification event of the first electronic device 100.

For example, the identification information of the first electronic device 100 may include information about a type, the performance, a product name, and the like of an electronic device. In addition, for example, the location information of the first electronic device 100 may include location information when the first electronic device 100 transmitted the information about the notification event.

According to an exemplary embodiment, the second electronic device 200 may provide the execution details of the notification event through the audio output interface 225 at the set time of the notification event.

For example, the second electronic device 200 may provide schedule information of the user as a sound through the audio output interface 225. In addition, for example, the second electronic device 200 may provide an alarm function by playing back a preset music file through the audio output interface 225 when a specific time comes.

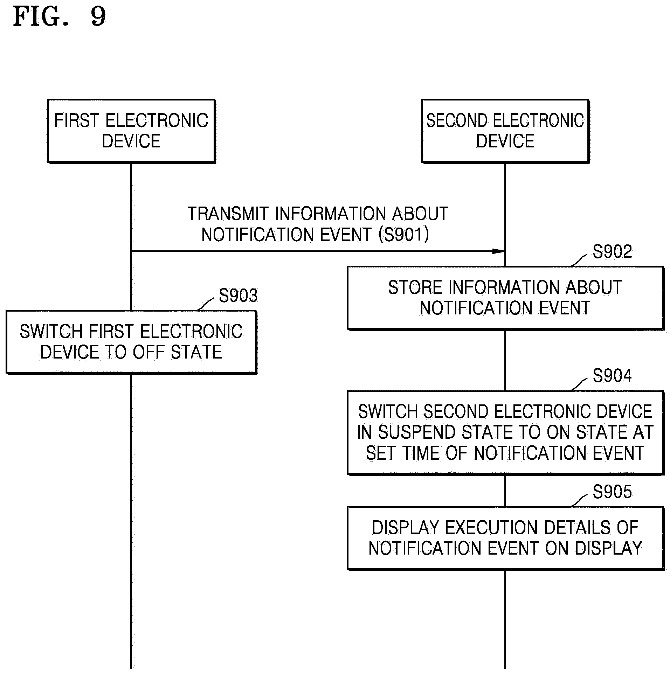

FIG. 9 is a sequence diagram for describing execution of a notification event in the second electronic device 200, according to an exemplary embodiment.

In operation S901 of FIG. 9, the controller 180 of the first electronic device 100 according to an exemplary embodiment may transmit information about the notification event to the second electronic device 200 through the communication interface 150. According to an exemplary embodiment, operation S901 of FIG. 9 may correspond to operation S703 of FIG. 7.

In operation S902 of FIG. 9, the controller 280 of the second electronic device 200 according to an exemplary embodiment may store the information about the notification event, which has been received from the first electronic device 100, in the storage 290.

In operation S903 of FIG. 9, the first electronic device 100 may switch to the off state. According to an exemplary embodiment, the first electronic device 100 may switch to the off state due a to discharge of the battery.

In operation S904 of FIG. 9, the controller 280 of the second electronic device 200 may switch the second electronic device 200 from the suspended state to the on state at a set time of the notification event. For example, if the set time of the notification event occurs when the second electronic device 200 is in the suspended state by being turned off based on an input of the user, the second electronic device 200 may automatically switch to the on state.

In operation S905 of FIG. 9, the controller 280 of the second electronic device 200 may display the execution details of the notification event on the display 215. For example, the second electronic device 200 may display schedule information of the user on the display 215 by executing the notification event.

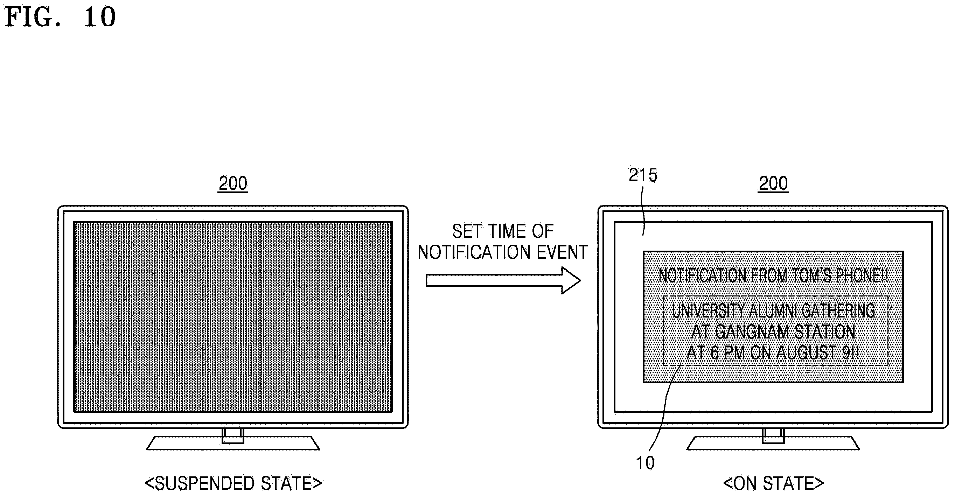

FIGS. 10 through 12 illustrate execution of a notification event in the second electronic device 200, according to an exemplary embodiment.

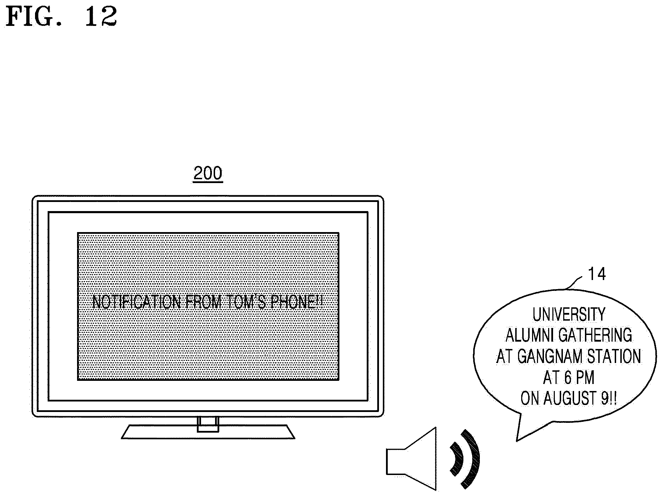

As shown in FIG. 12, if a set time of the notification event comes when the second electronic device 200 is in the suspended state, the second electronic device 200 may automatically switch to the on state and execute the notification event. For example, the second electronic device 200 may display schedule information 10 (e.g., "university alumni gathering at Gangnam station at 6 PM on August 9!!") of the user on the display 215. According to an embodiment, the second electronic device 200 may also output a preset alarm sound through the audio output interface 225.

The exemplary embodiment shown in FIG. 10 is but one of many possible embodiments and the disclosure is not limited thereto.

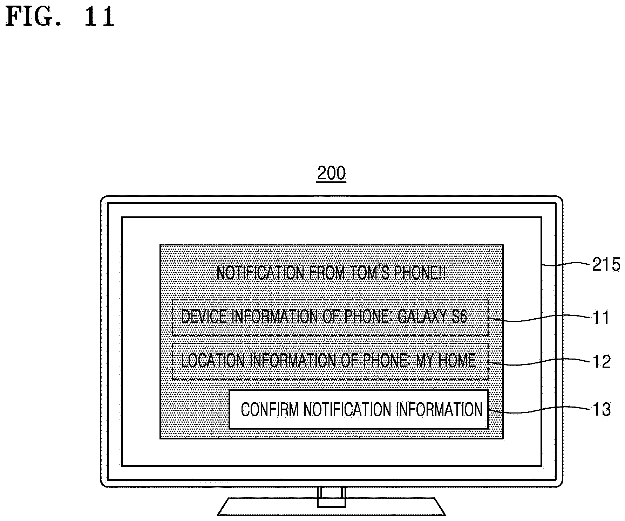

In FIG. 11, the second electronic device 200 may provide information related to the first electronic device 100 on the display 215 when the set time of the notification event comes. For example, the second electronic device 200 may display identification information 11 of the first electronic device 100, for example, a device type and a product name (e.g., "Galaxy S6"), on the display 215.

In addition, the second electronic device 200 may display, for example, location information 12 (e.g., "My home") of the first electronic device 100 on the display 215. For example, when it is determined that a location of the first electronic device 100, which is determined through the position sensor 146, is an address of the user's home, which is a registered point, the first electronic device 100 may transmit the location information of the first electronic device 100 to the second electronic device 200 before the first electronic device 100 switches to the off state due to a discharge of the battery.

In addition, for example, the second electronic device 200 may provide, on the display 215, a selection menu 13 for confirming or dismissing the contents of the notification event received from the first electronic device 100. In this case, the second electronic device 200 may display the contents of the notification event received from the first electronic device 100, on the display 215 based on a user input for selecting the selection menu 13.

The exemplary embodiment shown in FIG. 11 is but one of many possible embodiments and the disclosure is not limited thereto.

As shown in FIG. 12, the second electronic device 200 may output a sound 14 (e.g., "university alumni gathering at Gangnam station at 6 PM on August 9!!") through the audio output interface 225 with respect to the execution details of the notification event received from the first electronic device 100. According to an exemplary embodiment, the second electronic device 200 may also output a preset alarm sound through the audio output interface 225.

The exemplary embodiment shown in FIG. 12 is but one of many possible embodiments and the disclosure is not limited thereto.

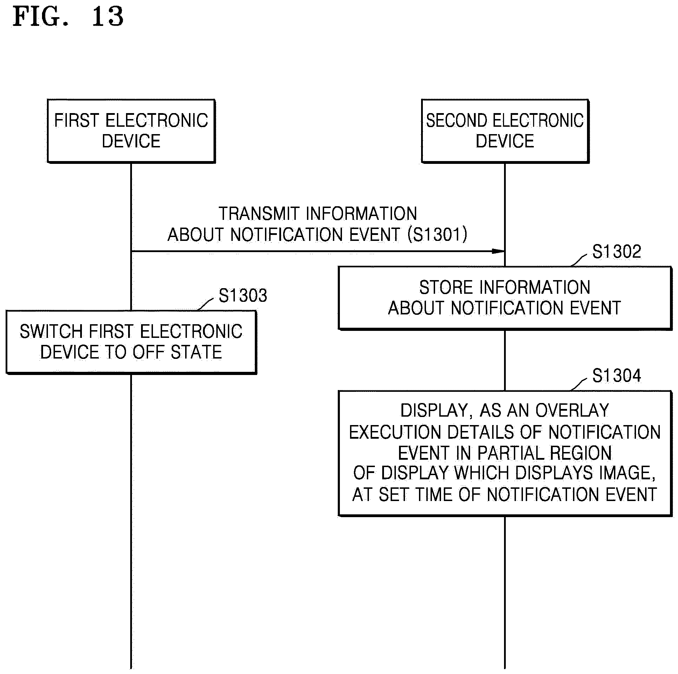

FIG. 13 is a sequence diagram for describing execution of a notification event in the second electronic device 200, according to another exemplary embodiment.

In operation S1301, the controller 180 of the first electronic device 100 according to an exemplary embodiment may transmit information about the notification event to the second electronic device 200 through the communication interface 150. According to an exemplary embodiment, operation S1301 of FIG. 13 may correspond to operation S703 of FIG. 7.

In operation S1302 of FIG. 13, the controller 280 of the second electronic device 200 according to an exemplary embodiment may store the information about the notification event, which has been received from the first electronic device 100, in the storage 290.

In operation S1303, the first electronic device 100 may switch to the off state. According to an exemplary embodiment, the first electronic device 100 may automatically switch to the off state due to a discharge of the battery.

In operation S1304, the controller 280 of the second electronic device 200 may display, as an overlay, the execution details of the notification event in a partial region of the display 215 that displays an image, at a set time of the notification event.

The second electronic device 200 may display a broadcast image on the display 215 if the second electronic device 200 is in the on state at the set time of the notification event. In this case, when the set time of the notification event comes, the second electronic device 200 may display, as an overlay, the execution details of the notification event on the broadcast image being displayed, in a partial region of the display 215.

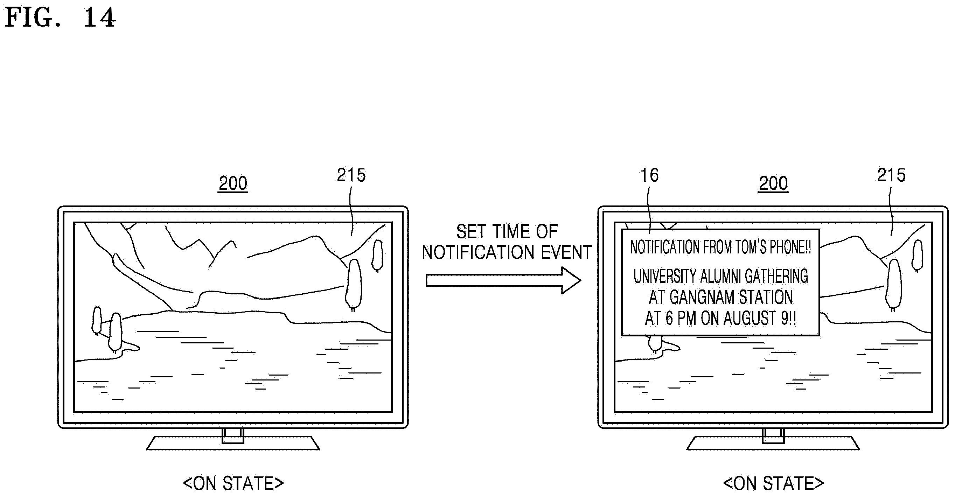

FIG. 14 illustrates execution of a notification event in the second electronic device 200, according to another exemplary embodiment.

As shown in FIG. 14, if a set time of the notification event comes when the second electronic device 200 is in the on state in which a broadcast image is being displayed, the second electronic device 200 may display, as an overlay, the execution details 16 (e.g., "Notification from Tom's phone! University alumni gathering at Gangnam station at 6 PM on August 9!!") of the notification event on the broadcast image being displayed on the display 215.

The exemplary embodiment shown in FIG. 14 is but one of many possible embodiments and the disclosure is not limited thereto.

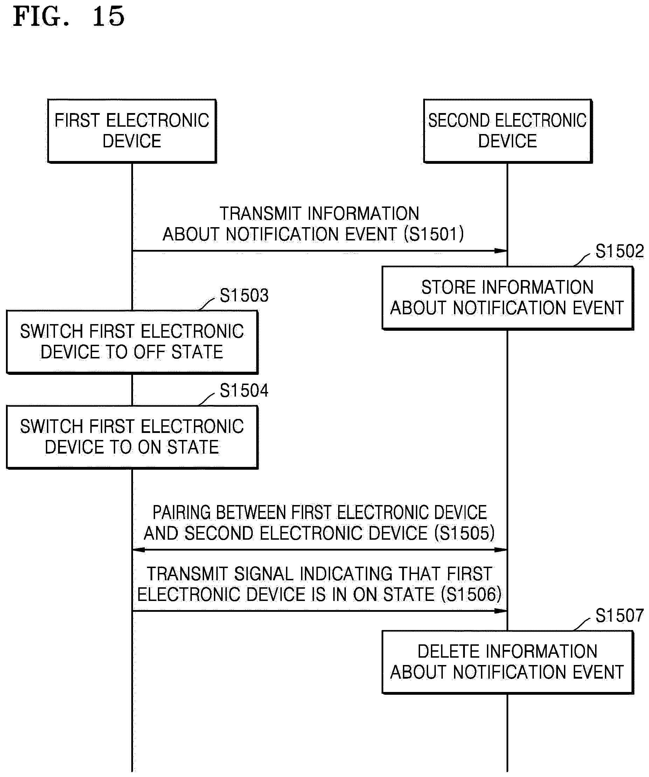

FIG. 15 is a sequence diagram for describing deletion of information about a notification event in the second electronic device 200, according to an exemplary embodiment.

In operation S1501 of FIG. 15, the controller 180 of the first electronic device 100 according to an exemplary embodiment may transmit information about the notification event to the second electronic device 200 through the communication interface 150. According to an exemplary embodiment, operation S1501 of FIG. 15 may correspond to operation S703 of FIG. 7.

In operation S1502 of FIG. 15, the controller 280 of the second electronic device 200 according to an exemplary embodiment may store the information about the notification event, which has been received from the first electronic device 100, in the storage 290.

In operation S1503, the first electronic device 100 may switch to the off state. According to an exemplary embodiment, the first electronic device 100 may automatically switch to the off state due to a discharging event of the battery.

In operation S1504, the first electronic device 100 may switch to the on state. According to an exemplary embodiment, the first electronic device 100 may switch to the on state due to a charging event of the battery.

In operation S1505, the first electronic device 100 may be paired with the second electronic device 200.

According to an exemplary embodiment, when the first electronic device 100 switches to the on state due to the charging event of the battery, the first electronic device 100 may search for another electronic device for pairing in a state in which a Bluetooth communication interface is activated. For example, the first electronic device 100 may be automatically paired with the discovered second electronic device 200.

In operation S1506, the first electronic device 100 may transmit a signal indicating the on state to the second electronic device 200. According to an exemplary embodiment, when the first electronic device 100 switches to the off state due to the discharging event of the battery after transmitting the information about the notification event and then switches to the on state again due to the charging event of the battery, the first electronic device 100 may transmit a signal indicating that the first electronic device 100 is in the on state to the second electronic device 200 through the communication interface 150.

In operation S1507, the second electronic device 200 may delete the information about the notification event. According to an exemplary embodiment, when it is determined that the first electronic device 100 is no longer in the off state but has switched to the on state, the second electronic device 200 may delete the information about the notification event, which has been received from the first electronic device 100.

For example, when the first electronic device 100 enables execution of the notification event because the first electronic device 100 is in the on state at a set time of a scheduled notification based on the information about the notification event, there is little need for the second electronic device 200 to execute the notification event on behalf of the first electronic device 100, and thus the second electronic device 200 may disregard the information about the notification event by deleting the information.

It will be understood that the exemplary embodiments described above are considered in a descriptive sense only and not for purposes of limitation. In addition, it will be understood that the flowcharts and sequence diagrams of FIGS. 7, 8, 9, 13, and 15 are not limited to the sequences of operations shown therein. In other words, some operations may be omitted or added according to various embodiments of this disclosure, and a sequence of some operations may be modified.

One or more exemplary embodiments may be implemented in a form of a recording medium including computer-readable and computer-executable instructions such as a program module executed by a computer system. A non-transitory computer-readable medium may be any medium that may be accessed by a computer system and includes all types of volatile and nonvolatile media and separated and non-separated media. In addition, the non-transitory computer-readable medium may include all types of computer storage media and communication media. The computer storage media include all types of volatile and nonvolatile and separated and non-separated media implemented by a known method or technique for storing information such as computer-readable instructions, a data structure, a program module, or other data. The communication media typically include computer-readable instructions, a data structure, a program module, other data of a modulated signal such as a carrier, other transmission mechanism, and arbitrary information delivery media.

In addition, in the specification, a "unit" may be a hardware component such as a processor or a circuit and/or a software component to be executed by a hardware component such as a processor.

The exemplary embodiments described above are only illustrative, and it will be understood by those of ordinary skill in the art that various changes in form and details may be made therein without changing the technical spirit and mandatory features of the inventive concept. Therefore, the exemplary embodiments should be understood in the illustrative sense only and not for the purpose of limitation in all aspects. For example, each component described as a single type may be carried out by being distributed, and likewise, components described as a distributed type may also be carried out by being coupled. Descriptions of features or aspects within each exemplary embodiment should typically be considered as available for other similar features or aspects in other exemplary embodiments.

While one or more exemplary embodiments have been described with reference to the figures, it will be understood by those of ordinary skill in the art that various changes in form and details may be made therein without departing from the spirit and scope as defined by the following claims.

## Claims

1. An electronic device comprising:
a communication interface configured to communicate with an external device; and
a controller configured to transmit information about a notification event which is set in the electronic device, to the external device through the communication interface when it is determined that a battery level at a first time is less than or equal to a preset threshold value, and the notification event is scheduled for a second time which is within a pre-defined time interval from the first time.

2. The electronic device of claim 1, wherein the controller is further configured to transmit a signal for requesting an execution of the notification event to the external device through the communication interface.

3. The electronic device of claim 2,
wherein the controller is further configured to transmit the information about the notification event to the external device which is a suspended state, and
wherein the signal for requesting the execution of the notification event comprises a signal for executing the notification event when the external device is the suspended state.

4. The electronic device of claim 3,
wherein when the external device is the suspended state based on a user input signal, a display is off state and the external device is connectable to the electronic device via a network.

5. The electronic device of claim 1, wherein the controller is further configured to transmit a signal indicating that the electronic device is in an on state to the external device through the communication interface, when the electronic device switches to an off state after transmitting the information about the notification event and then the electronic device switches from the off state to the on state.

6. An electronic device comprising:
a communication interface configured to communicate with an external device; and
a controller configured to:
receive, at a first time, information about a notification event which is set in the external device from the external device through the communication interface, the notification event being scheduled for a second time later than the first time,
execute the notification event when it is determined that the external device is in an off state at the second time.

7. The electronic device of claim 6, wherein the controller is further configured to receive a signal for requesting an execution of the notification event from the external device.

8. The electronic device of claim 7, wherein the signal for requesting the execution of the notification event comprises a signal for executing the notification event when the external device is the suspended state.

9. The electronic device of claim 6, further comprising a display,
wherein the controller is further configured to switch the electronic device from a suspended state to an on state at the second time and display information about execution of the notification event on the display.

10. The electronic device of claim 6, further comprising a display,
wherein the controller is further configured to display, as an overlay, information about execution of the notification event on the display at the second time.

11. The electronic device of claim 6, further comprising a display,
wherein the controller is further configured to display at least one of identification information of the external device and location information of the external device on the display at the second time.

12. The electronic device of claim 6, further comprising an audio output interface,
wherein the controller is further configured to provide information about execution of the notification event through the audio output interface at the second time.

13. The electronic device of claim 6, wherein the controller is further configured to delete the information about the notification event when a signal indicating that the external device is in the on state is received through the communication interface before the second time.

14. A method comprising:
receiving, at a first time, information about a notification event which is set in an external device from the external device through a communication interface , the notification event being scheduled for a second time later than the first time;
determining that the external device is in an off state at the second time; and
executing the notification event.

15. The method of claim 14, wherein the executing of the notification event comprises:
switching the electronic device from a suspended state to an on state at the second time; and
displaying information about the execution details of the notification event on a display.
